# EUROPEAN PATENT APPLICATION

(11) **EP 4 549 787 A1**
(43) Date of publication of application: **07.05.2025**
(21) Application number: 24206304.8
(22) Date of filing: 14.10.2024
(51) Int. Cl.: F16K 11/22, F16K 27/10, F16K 5/04, F16K 11/083, F16K 11/085, F16K 27/06

(54) **MANIFOLD**

(30) Priority: 30.10.2023 JP 2023185951
(71) Applicant: Aisin Corporation, Aichi 448-8650 (JP)
(72) Inventor: OSUKA, Shinya, Kariya 448-8650 (JP); ISHII, Masato, Kariya 448-8650 (JP)
(74) Representative: Kramer Barske Schmidtchen Patentanwälte PartG mbB

(57) **Abstract**

A manifold (300) includes a resin-made manifold main body (302) including a plurality of housings (310, 330) joined to each other and having a plurality of flow paths therein, and a rotary valve (340) that regulates a flow of a fluid flowing through the flow paths, wherein a first housing (310) that is one of two housings having joint portions (324, 332) joined to each other among the plurality of housings (310, 330) constituting the manifold main body (302) includes a cylindrical valve accommodation portion (316) that is allowed to accommodate and support the rotary valve (340), and wherein at least part of the valve accommodation portion (316) protrudes toward a second housing (330) side relative to the joint portions (324, 332), the second housing (330) being the other of the two housings.

## Description

### TECHNICAL FIELD

The present disclosure relates to a manifold.

### BACKGROUND DISCUSSION

In recent years, an automobile (hybrid electric vehicle (HEV), a plug-in hybrid electric vehicle (PHEV), a battery electric vehicle (BEV), a fuel cell electric vehicle (FCEV), and the like including a motor as a traveling drive source have been widely used. Hereinafter, these automobiles are collectively referred to as electric vehicles. In an electric vehicle, there are many devices that require cooling, such as a motor (including an internal combustion engine such as an engine), a battery, an air conditioner, and an ECU. Therefore, a cooling circuit that circulates a coolant, a refrigerant, and oil is configured to cool these devices. At this time, by forming the flow path of the cooling circuit in the manifold, routing of the pipe can be eliminated to simplify the flow path configuration, and the cooling circuit can be downsized.

WO 2023/104347 A discloses a manifold in which two housings are joined and a valve accommodation portion is formed in each housing to house a control valve.

In the manifold of WO 2023/104347 A, since two housings are joined to form a valve accommodation portion in each housing to house a control valve, the height of the manifold is required to be equal to or higher than the height of the control valve. That is, the height of the manifold is constrained by the height of the control valve, and there is room for improvement.

A need thus exists for a manifold that is hardly constrained by the valve height.

### SUMMARY

One embodiment of a manifold according to the present disclosure includes a resin-made manifold main body including a plurality of housings joined to each other and having a plurality of flow paths therein, and a rotary valve that regulates a flow of a fluid flowing through the flow paths, wherein a first housing that is one of two housings having joint portions joined to each other among the plurality of housings constituting the manifold main body includes a cylindrical valve accommodation portion that is allowed to accommodate and support the rotary valve, and wherein at least part of the valve accommodation portion protrudes toward a second housing side relative to the joint portions, the second housing being the other of the two housings.

According to the present embodiment, at least part of the valve accommodation portion formed in the first housing protrudes toward the second housing side relative to the joint portion. With this configuration, the height of the manifold main body can be reduced, as compared with a configuration in which at least part of the valve accommodation portion formed in the first housing does not protrude toward the second housing side relative to the joint portion. As a result, it is possible to provide a manifold that is hardly constrained by the height of the rotary valve.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a perspective view illustrating a manifold according to the present embodiment;
Fig. 2 is an exploded perspective view of a manifold;
Fig. 3 is an exploded perspective view of a manifold main body;
Fig. 4 is a cross-sectional view taken along line IV-IV in Fig. 1; and
Fig. 5 is a side view illustrating a manifold in a state of being fixed to a support frame.

### DETAILED DESCRIPTION

Hereinafter, embodiments of a manifold according to the present disclosure will be described in detail with reference to the drawings. Note that the embodiments described below are examples for describing the present disclosure, and the present disclosure is not limited only to these embodiments. Therefore, the present disclosure can be implemented in various forms without departing from the gist thereof.

### [Configuration of manifold]

A manifold 300 according to the present embodiment is used for electric vehicles that are an automobile (hybrid electric vehicle (HEV), a plug-in hybrid electric vehicle (PHEV), a battery electric vehicle (BEV), a fuel cell electric vehicle (FCEV), and the like including a motor as a traveling drive source. The manifold 300 is formed by integrating a motor (including an internal combustion engine such as an engine), a flow path for circulating a coolant (an example of a fluid) for cooling a device requiring cooling, such as a battery, an air conditioner, and an ECU, a rotary valve that regulates a flow of the coolant, and a water pump that pumps the coolant of an electric vehicle.

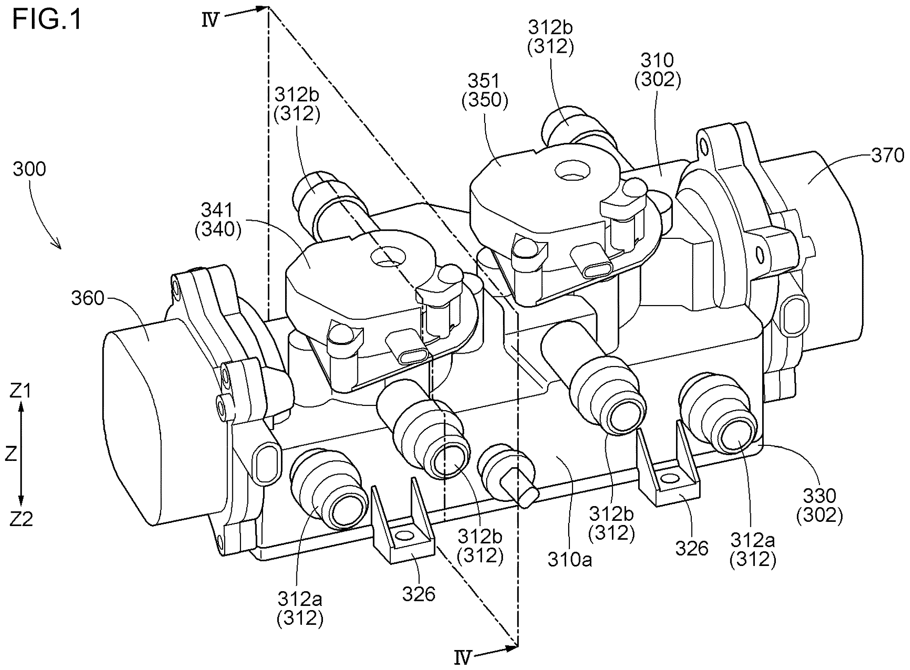

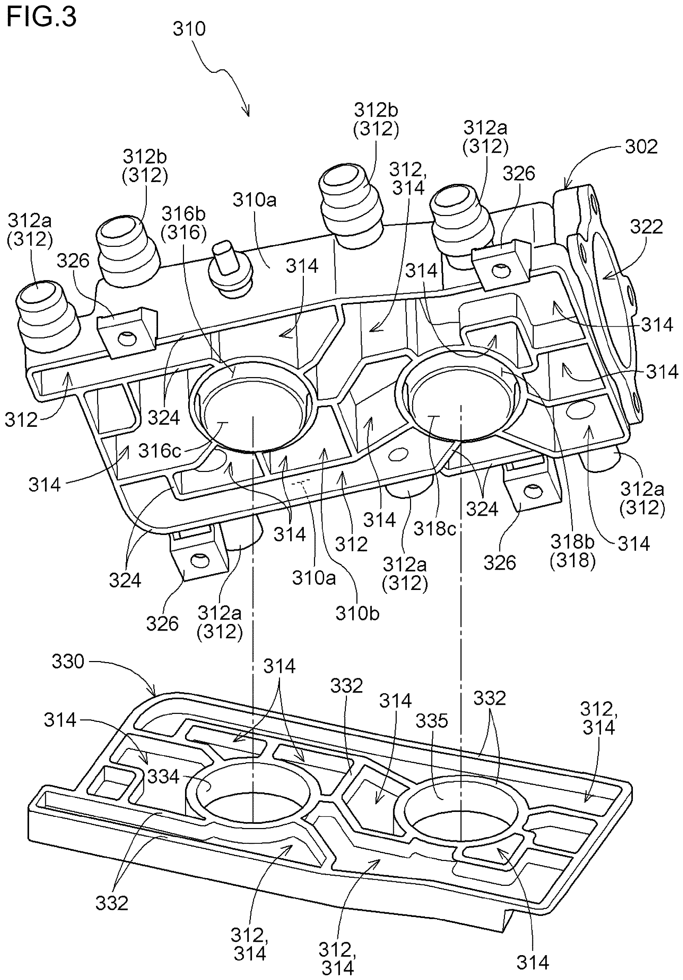

As shown in Fig. 1, the manifold 300 includes a first rotary valve 340 (an example of a rotary valve), a second rotary valve 350 (an example of a rotary valve), a first water pump 360, a second water pump 370, and a manifold main body 302 in which a plurality of flow paths 312 for circulating a coolant therethrough is formed. The manifold main body 302 is formed by joining and integrating a plurality of housings by a method such as welding, and in the present embodiment, as shown in Fig. 3, the manifold main body is formed by joining a first housing 310 (an example of a housing) and a second housing 330 (an example of a housing). The coolant includes cooling water such as a long life coolant (LLC) or insulating oil such as paraffin.

The plurality of flow paths 312 illustrated in Figs. 1 to 3 is a concept including both an inflow path through which the coolant flows into the first rotary valve 340 or the second rotary valve 350 and an outflow path through which the coolant flows out from the first rotary valve 340 or the second rotary valve 350. The plurality of flow paths 312 is a concept including all flow paths through which the coolant flows the inside of the manifold main body 302, such as a flow path formed only in the first housing 310, a flow path formed only in the second housing 330, and a flow path formed across the first housing 310 to the second housing 330.

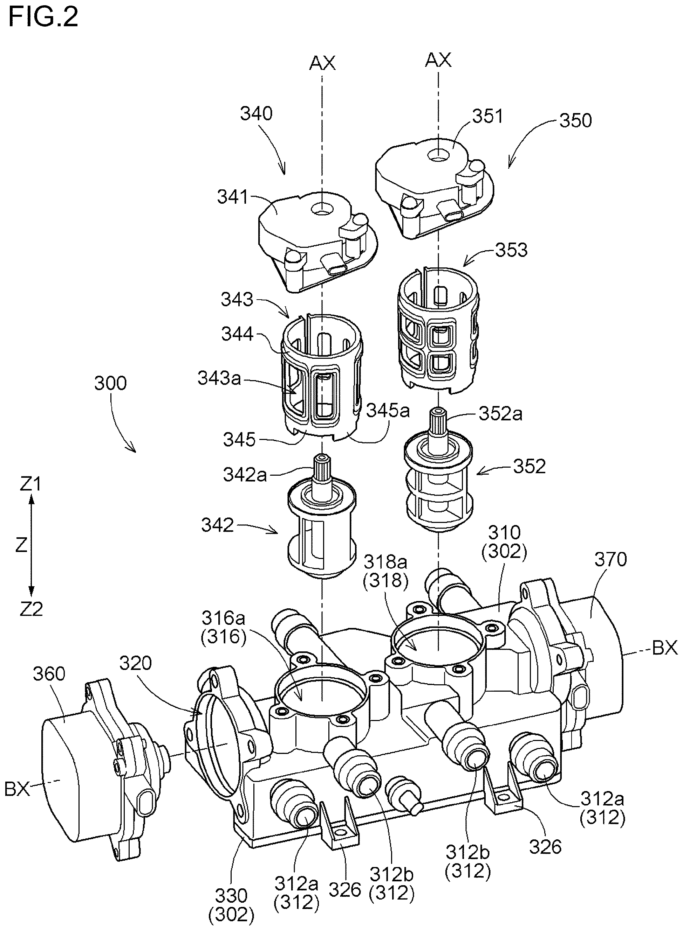

In the flow path 312 having a portion protruding outward from the outer wall 310a of the first housing 310 in the flow path 312 in the present embodiment, a plurality of (five in the present embodiment) first flow paths 312a is disposed on a side close to the second housing 330 and a plurality of (four in the present embodiment) second flow paths 312b is disposed on a side far from the second housing 330 in a direction along the rotation axis AX (an example of the central axis) of each of the first rotary valve 340 and the second rotary valve 350. The flow path 312 is a general term for the first flow path 312a and the second flow path 312b. The protruding directions of the nine flow paths 312 are all perpendicular to the rotation axis AX (see Fig. 2). Hereinafter, a direction (height direction) parallel to the rotation axis AX is referred to as a "Z direction". In the Z direction, a direction of the first housing 310 with respect to the second housing 330 is referred to as a Z1 direction, and a direction of the second housing 330 with respect to the first housing 310 is referred to as a Z2 direction.

In the manifold main body 302 of the present embodiment, the first rotary valve 340, the second rotary valve 350, the first water pump 360, and the second water pump 370 are all attached to the first housing 310. The first rotary valve 340 and the first water pump 360 are disposed adjacent to each other, and the second rotary valve 350 and the second water pump 370 are disposed adjacent to each other. As illustrated in Fig. 2, the rotation axis AX of the first rotary valve 340 and the rotation axis AX of the second rotary valve 350 are parallel to each other, and the rotation axis BX of the first water pump 360 and the rotation axis BX of the second water pump 370 are parallel to each other. The rotation axis AX of the first rotary valve 340 and the second rotary valve 350 and the rotation axis BX of the first water pump 360 and the second water pump 370 are perpendicular to each other. In the second housing 330, only some of the plurality of flow paths 312 is formed (see Fig. 3).

As illustrated in Figs. 1 and 2, the first rotary valve 340 includes a first actuator 341 (an example of a lid), a first valve body 342 (an example of a rotor), and a first seal member 343 (an example of a seal member). The second rotary valve 350 includes a second actuator 351 (an example of a lid), a second valve body 352 (an example of a rotor), and a second seal member 353 (an example of a seal member). The first actuator 341 and the second actuator 351 are fixed to the first housing 310 in a state of being exposed to the surface of the first housing 310. The first valve body 342 and the first seal member 343 are accommodated in a first valve chamber 316 (an example of a valve accommodation portion) formed in the first housing 310. The second valve body 352 and the second seal member 353 are accommodated in a second valve chamber 318 (an example of a valve accommodation portion) formed in the first housing 310. The first valve chamber 316 and the second valve chamber 318 are disposed in a central region 310b (see Fig. 3) located between the pair of opposing outer walls 310a of the first housing 310 and between the first water pump 360 and the second water pump 370.

As illustrated in Fig. 3, a plurality of spare chambers 314 is formed around each of the first valve chamber 316 and the second valve chamber 318 of the first housing 310. The plurality of spare chambers 314 is formed between the flow path 312 and the first valve chamber 316 and between the flow path 312 and the second valve chamber 318, and the flow path 312 and the first valve chamber 316 communicate with each other and the flow path 312 and the second valve chamber 318 communicate with each other via the spare chamber 314. The spare chamber 314 is a concept including both an inflow spare chamber connected to the inflow path and an outflow spare chamber connected to the outflow path. In the present embodiment, the spare chamber 314 is disposed in all the flow paths 312 communicating with the first valve chamber 316 and in all the flow paths 312 communicating with the second valve chamber 318. The plurality of flow paths 312 and the plurality of spare chambers 314 are radially disposed so as to surround each of the first valve chamber 316 and the second valve chamber 318.

In the first housing 310, a first partition wall 324 (an example of a joint portion) that partitions two adjacent ones of the flow path 312, the first valve chamber 316, the second valve chamber 318, the spare chamber 314, a first vortex chamber 320 (see Fig. 2), and a second vortex chamber 322 is formed. The first housing 310 includes only the flow path 312, the first valve chamber 316, the second valve chamber 318, the spare chamber 314, the first vortex chamber 320, the second vortex chamber 322, and the first partition wall 324.

In the second housing 330, a second partition wall 332 (an example of a joint portion) that partitions two adjacent ones of some of the plurality of flow paths 312 and the spare chamber 314 formed in the second housing 330 is formed. The manifold main body 302 is formed by joining the first partition wall 324 of the first housing 310 and the second partition wall 332 of the second housing 330 by a method such as welding.

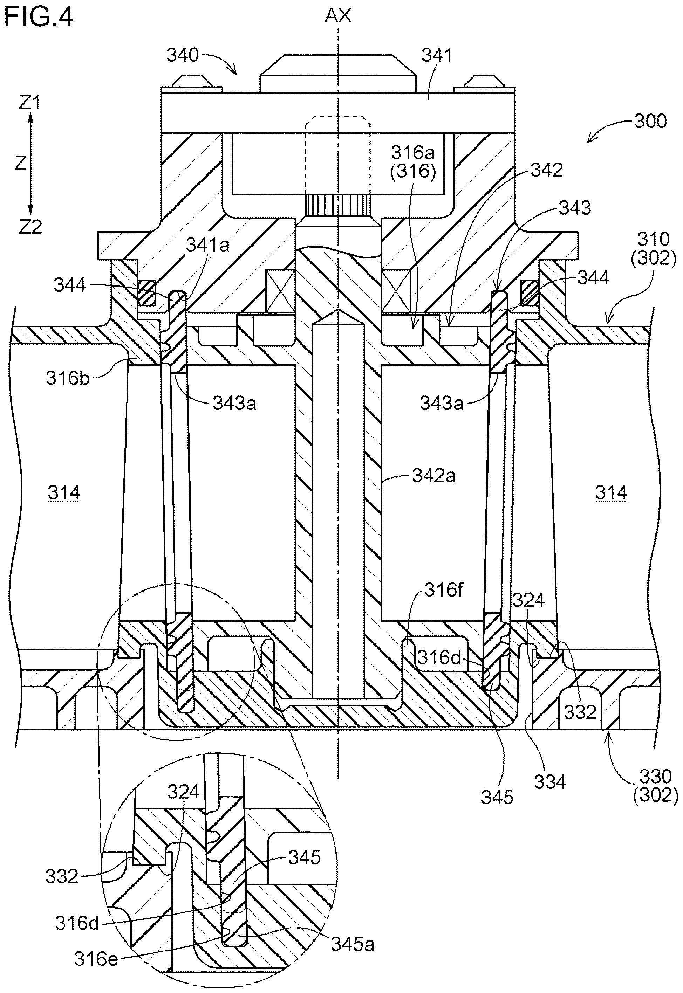

As illustrated in Figs. 2 and 3, the first valve chamber 316 formed in the first housing 310 has a bottomed cylindrical shape having a first opening 316a (an example of an opening), a first side wall 316b, and a first bottom wall 316c (an example of a bottom wall) (see Fig. 4). The central axis of the first valve chamber 316 is coaxial with the rotation axis AX in a state where the first rotary valve 340 is accommodated. That is, the central axis of the first valve chamber 316 is also the rotation axis AX. The inner diameter of the first valve chamber 316 is formed to decrease from the first opening 316a toward the first bottom wall 316c. That is, the first side wall 316b has a tapered shape extending in the Z2 direction. As a result, the first valve body 342 and the first seal member 343 of the first rotary valve 340 can be smoothly inserted into the first valve chamber 316 from the first opening 316a. In addition, the first valve body 342 and the first seal member 343 can be reliably positioned in the Z direction with respect to the first valve chamber 316.

Part of the first side wall 316b of the first valve chamber 316 and the first bottom wall 316c protrude below (in the Z2 direction) the first partition wall 324. That is, part of the first side wall 316b and the first bottom wall 316c protrude toward the second housing 330 side relative to the first partition wall 324. A first through hole 334 is formed at a position, of the second housing 330, facing the first valve chamber 316, and part of the first side wall 316b of the first valve chamber 316 and the first bottom wall 316c are fitted into the first through hole 334 of the second housing 330 by joining the first housing 310 and the second housing 330. The first bottom wall 316c does not protrude below (in the Z2 direction) the second housing 330.

Similarly, the second valve chamber 318 has a bottomed cylindrical shape having a second opening 318a (an example of an opening), a second side wall 318b, and a second bottom wall 318c (an example of a bottom wall). The central axis of the second valve chamber 318 is coaxial with the rotation axis AX in a state where the second rotary valve 350 is accommodated. That is, the central axis of the second valve chamber 318 is also the rotation axis AX. The inner diameter of the second valve chamber 318 is formed to decrease from the second opening 318a toward the second bottom wall 318c. That is, the second side wall 318b has a tapered shape extending in the Z2 direction. As a result, the second valve body 352 and the second seal member 353 of the second rotary valve 350 can be smoothly inserted into the second valve chamber 318 from the second opening 318a. In addition, the second valve body 352 and the second seal member 353 can be reliably positioned in the Z direction with respect to the second valve chamber 318.

Part of the second side wall 318b of the second valve chamber 318 and the second bottom wall 318c protrude below (in the Z2 direction) the first partition wall 324. That is, part of the second side wall 318b and the second bottom wall 318c protrude toward the second housing 330 side relative to the first partition wall 324. A second through hole 335 is formed at a position, of the second housing 330, facing the second valve chamber 318, and part of the second side wall 318b of the second valve chamber 318 and the second bottom wall 318c are fitted into the second through hole 335 of the second housing 330 by joining the first housing 310 and the second housing 330. The second bottom wall 318c does not protrude below (in the Z2 direction) the second housing 330.

In the present embodiment, part of the first side wall 316b and the first bottom wall 316c of the first valve chamber 316, and part of the second side wall 318b and the second bottom wall 318c of the second valve chamber 318 protrude below the first partition wall 324. These protruding portions are fitted into the first through hole 334 and the second through hole 335 of the second housing 330, respectively, in a state where the first housing 310 and the second housing 330 are joined. With such a configuration, a length (height) of the manifold main body 302 along the Z direction can be shortened, as compared with a configuration in which the first valve chamber 316 and the second valve chamber 318 do not protrude below the first partition wall 324. As a result, the manifold 300 can be downsized.

In the present embodiment, the first valve body 342 is accommodated in the first valve chamber 316 of the first housing 310, and the first actuator 341 is fixed to the first housing 310 to cover the first opening 316a. As a result, one end portion of a first rotation shaft 342a of the first valve body 342 is connected to the first actuator 341, and the other end portion is supported by a first bush 316f formed on the first bottom wall 316c (see Fig. 4). As described above, by supporting both ends of the first rotation shaft 342a by the first actuator 341 fixed to the first housing 310 and the first bush 316f formed in the first housing 310, the rotation axis AX tends to be parallel to the Z direction, as compared with the configuration in which the first rotation shaft 342a is supported by the first housing 310 and the second housing 330, thereby realizing smooth rotation of the first valve body 342.

The second valve body 352 is accommodated in the second valve chamber 318 of the first housing 310, and the second actuator 351 is fixed to the first housing 310 to cover the second opening 318a. As a result, one end portion of a second rotation shaft 352a of the second valve body 352 is connected to the second actuator 351, and the other end portion is supported by a second bush (not illustrated) formed on the second bottom wall 318c. As described above, by supporting both ends of the second rotation shaft 352a by the second actuator 351 fixed to the first housing 310 and the second bush formed in the first housing 310, the rotation axis AX tends to be parallel to the Z direction, as compared with the configuration in which the second rotation shaft 352a is supported by the first housing 310 and the second housing 330, thereby realizing smooth rotation of the second valve body 352.

As illustrated in Figs. 1 to 3 and 5, the first housing 310 includes a plurality of (four in the present embodiment) stays 326 (an example of fixing portions) for fixing the manifold 300 to the support frame 380 of the electric vehicle. The stay 326 extends in the Z2 direction.

### [Configuration of rotary valve]

Next, configurations of the first rotary valve 340 and the second rotary valve 350 will be described. In the present embodiment, the first rotary valve 340 and the second rotary valve 350 have the same configuration except for the configurations of the first valve body 342 and the second valve body 352 that switch the flow path 312 (see Fig. 2). Therefore, only the configuration of the first rotary valve 340 will be described below, and a detailed description of the configuration of the second rotary valve 350 will be omitted.

As illustrated in Fig. 4, in the first rotary valve 340, the first seal member 343 is disposed so as to be in contact with the first side wall 316b and the first bottom wall 316c of the first valve chamber 316. The first valve body 342 is disposed radially inside the first seal member 343 so as to be in contact with the first seal member 343.

The first valve body 342 has a columnar shape (see Fig. 2), and a flow path is formed therein. The first rotation shaft 342a of the first valve body 342 is disposed so as to be coaxial with the rotation axis AX in a state where the first valve body 342 is accommodated in the first valve chamber 316. One end portion of the first rotation shaft 342a is connected to the first actuator 341, and rotates the first rotation shaft 342a by driving the first actuator 341 to rotate the first valve body 342. The other end of the first rotation shaft 342a is supported by the first bush 316f formed on the first bottom wall 316c. By rotating the first valve body 342, the combination of the flow path 312 of the cooling water flowing into the first valve chamber 316 and the flow path 312 of the cooling water flowing out from the first valve chamber 316 can be changed. In this manner, the first rotary valve 340 can regulate the flow of the cooling water flowing through the flow path 312. In the first rotary valve 340, the first seal member 343 does not rotate when the first valve body 342 rotates. Since the first valve body 342 and the first seal member 343 are in contact with each other, the first valve body 342 rotates while sliding on the inner peripheral face of the first seal member 343.

The first seal member 343 is disposed over substantially the entire circumference in the circumferential direction of the first valve chamber 316. To be precise, the first seal member 343 is not disposed over the entire circumference of the first valve chamber 316 in the circumferential direction (not annular), and has a substantially C shape that does not has part thereof in the circumferential direction in plan view (when viewed in the Z direction) (see Fig. 2). However, in the following description, the entire first seal member 343 in the circumferential direction is also referred to as "over the entire circumference". The first seal member 343 is elastically deformable, and is sandwiched between the first valve chamber 316 and the first valve body 342 and compressed in the radial direction to seal the flow path and prevent the coolant from leaking from the flow path. The first seal member 343 is formed of an elastically deformable rubber material such as nitrile rubber (NBR), fluororubber (FKM), or urethane rubber (U).

The first seal member 343 has a plurality of flow ports 343a at positions corresponding to the plurality of spare chambers 314 (flow paths 312) formed around the first valve chamber 316 of the first housing 310. Accordingly, the cooling water can flow between the spare chamber 314 and the first valve body 342 while ensuring the sealing property.

An upper rib 344 and a lower rib 345 are formed at both ends of the first seal member 343 along the Z direction over the entire circumference (see Fig. 2). The upper rib 344 and the lower rib 345 extend along the Z direction and have a substantially cylindrical shape when viewed in the Z direction. In the lower rib 345, a plurality of rotation stoppers 345a extends in the Z2 direction from the distal end of the lower rib 345. In the present embodiment, a total of three rotation stoppers 345a are disposed at about every 120 degrees.

As illustrated in Fig. 4, in a face, of the first actuator 341, facing the first valve chamber 316, an annular upper groove 341a (an example of a groove) is formed around the rotation axis AX when viewed in the Z direction. By inserting the upper rib 344 of the first seal member 343 into the upper groove 341a, the upper groove 341a sandwiches and holds the upper rib 344. The upper groove 341a may not have an annular shape when viewed in the Z direction, but may have a substantially C shape into which the upper rib 344 is fitted without a gap.

An annular lower groove 316d (an example of a groove) is formed in the first bottom wall 316c of the first valve chamber 316 around the rotation axis AX when viewed in the Z direction. By inserting the lower rib 345 of the first seal member 343 into the lower groove 316d, the lower groove 316d sandwiches and holds the lower rib 345. The lower groove 316d may not have an annular shape when viewed in the Z direction, and may have a substantially C shape into which the lower rib 345 is fitted without a gap.

In the bottom of the lower groove 316d formed in the first bottom wall 316c of the first valve chamber 316, a plurality of (three in the present embodiment) stopper grooves 316e into which the rotation stopper 345a is inserted is formed. The stopper groove 316e has such a size that the rotation stopper 345a is fitted without a gap. By inserting the lower rib 345 into the lower groove 316d in a state where the rotation stopper 345a of the first seal member 343 and the stopper groove 316e of the first bottom wall 316c are aligned, the lower groove 316d and the stopper groove 316e can sandwich and hold the lower rib 345 and the rotation stopper 345a. At this time, the flow port 343a of the first seal member 343 faces the spare chamber 314 formed around the first valve chamber 316.

In the first rotary valve 340 of the present embodiment, the first seal member 343 has the upper rib 344 and the lower rib 345 at both ends along the Z direction, and the upper rib 344 and the lower rib 345 are sandwiched between the upper groove 341a and the lower groove 316d, respectively. Therefore, the first seal member 343 is positioned in the Z direction, and the first seal member 343 can be prevented from falling down due to an external force, rotation of the first valve body 342, or the like. Further, since the rotation stopper 345a is fitted in the stopper groove 316e, even when the first valve body 342 rotates while sliding on the inner peripheral face of the first seal member 343, the first seal member 343 can be prevented from co-rotating.

### [Fixing of manifold]

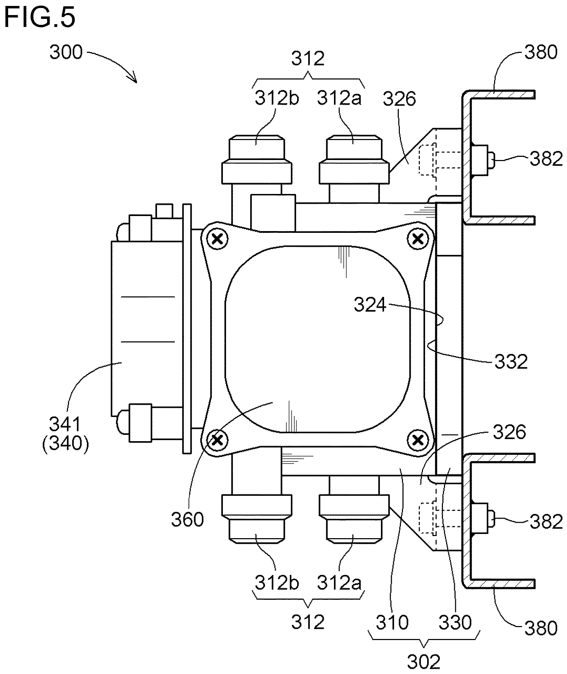

Next, a method of supporting the manifold 300 in the electric vehicle will be described with reference to Fig. 5. The manifold 300 is supported by being fixed to a support frame 380 of the electric vehicle by a method such as fastening a stay 326 with a bolt 382.

As described above, four stays 326 are disposed in the first housing 310 of the manifold main body 302 (see Fig. 3). In the present embodiment, various auxiliary machines such as the first rotary valve 340, the second rotary valve 350, the first water pump 360, and the second water pump 370 are attached to the first housing 310, while only some of the plurality of flow paths 312 are formed in the second housing 330 (see Figs. 1 and 3). Therefore, the first housing 310 to which various auxiliary machines are attached is much heavier than the second housing 330.

In a case where the stay 326 is disposed in the second housing 330 in the manifold 300, when the manifold 300 is fixed to the support frame 380 in a posture as illustrated in Fig. 5, the first housing 310 to which various auxiliary machines are attached is supported at a position where the first partition wall 324 of the first housing 310 and the second partition wall 332 of the second housing 330 are joined by a method such as welding. That is, since the center of gravity of the manifold 300 is located at a position on the first housing 310 side rather than a portion where the first housing 310 and the second housing 330 are joined to each other, a force for releasing the joining acts on the joined portion due to the weight of the first housing 310 to which various auxiliary machines are attached. When vibration, impact, or the like during traveling of the electric vehicle acts on the joint portion in such a state, in the worst case, there is a possibility that the joint is released and the first housing 310 falls off.

However, in the manifold 300 of the present embodiment, since the stay 326 is disposed in the first housing 310 to which various auxiliary machines are attached, the heavy first housing 310 is directly fixed to the support frame 380. Therefore, the force in the direction in which the joint acting on the joint portion between the first partition wall 324 of the first housing 310 and the second partition wall 332 of the second housing 330 is released is only due to the weight of the lightweight second housing 330. Therefore, even when vibration, impact, or the like during traveling of the electric vehicle acts on the joint portion, there is little possibility that the joint is released and the second housing 330 falls off. Therefore, the manifold 300 can be reliably fixed to the support frame 380.

### [Other embodiments]

<1> In the above embodiment, the first valve chamber 316 and the second valve chamber 318 are covered with the first actuator 341 and the second actuator 351, respectively, but may be covered with another one that is not an actuator. In this case, an actuator for rotating the first valve body 342 and the second valve body 352 may be separately disposed outside the lid.
<2> In the above embodiment, the first through hole 334 and the second through hole 335 into which the first bottom wall 316c of the first valve chamber 316 and the second bottom wall 318c of the second valve chamber 318 of the first housing 310 are fitted are formed in the second housing 330, but they are not necessarily through holes. Instead of the through hole, a bottomed recess may be formed in the second housing 330, and each of the first bottom wall 316c and the second bottom wall 318c may be fitted into the recess.
<3> In the above embodiment, the first bottom wall 316c and the second bottom wall 318c are configured not to protrude below the second housing 330, but may be configured to protrude below the second housing 330.
<4> In the above embodiment, the first seal member 343 is fixed to the first valve chamber 316 by the upper rib 344 and the lower rib 345, but may be configured to be fixed to the first valve chamber 316 by any one of the upper rib 344 and the lower rib 345. The same applies to the second seal member 353.
<5> In the above embodiment, the rotation stopper 345a of the first seal member 343 is formed only on the lower rib 345, but the present invention is not limited thereto. The rotation stopper 345a may be configured to be formed on the upper rib 344 instead of the lower rib 345 or together with the lower rib 345. The same applies to the second seal member 353.
<6> In the above embodiment, the manifold main body 302 is configured by the first housing 310 and the second housing 330, but may be configured by combining three or more housings.

In the embodiment of the manifold 300 described above, the following configuration is conceived.
(1) An aspect of a manifold (300) includes a resin-made manifold main body (302) including a plurality of housings (310, 330) joined to each other and having a plurality of flow paths (312) therein, and a rotary valve (340, 350) that regulates a flow of a fluid flowing through the flow paths (312), a first housing (310) that is one of two housings having joint portions (324, 332) joined to each other among the plurality of housings (310, 330) constituting the manifold main body (302) includes a cylindrical valve accommodation portion (316, 318) that is allowed to accommodate and support the rotary valve (340, 350), and at least part of the valve accommodation portion (316, 318) protrudes toward a second housing (330) side relative to the joint portions (324, 332), the second housing (330) being the other of the two housings.

In the aspect, at least part of the valve accommodation portion (316, 318) formed in the first housing (310) protrudes toward the second housing (330) side relative to the joint portions (324, 332). With this configuration, the height of the manifold main body (302) can be reduced, as compared with a configuration in which at least part of the valve accommodation portion (316, 318) formed in the first housing (310) does not protrude toward the second housing (330) side relative to the joint portions (324, 332). As a result, it is possible to provide the manifold (300) which is hardly constrained by the height of the rotary valve (340, 350).

(2) In the manifold (300) according to Item (1), the valve accommodation portion (316, 318) preferably has an opening (316a, 318a) into which the rotary valve (340, 350) is allowed to be inserted and a bottom wall (316c, 318c) that is allowed to support the rotary valve (340, 350), and an inner diameter of the valve accommodation portion (316, 318) preferably decreases from an opening (316a, 318a) side toward a bottom wall (316c, 318c) side.

With this configuration, the rotary valve (340, 350) can be smoothly inserted into the valve accommodation portion (316, 318) from the opening (316a, 318a). In addition, the rotary valve (340, 350) can be reliably positioned with respect to the valve accommodation portion (316, 318).

(3) The manifold (300) according to Item (2) preferably further includes a lid (341, 351) that covers the opening (316a, 318a) and is fixed to the first housing (310), the rotary valve (340, 350) preferably includes a rotor (342, 352) that rotates about a central axis (AX) of the valve accommodation portion (316, 318) to regulate a flow of the fluid, and a seal member (343, 353) disposed between the rotor (342, 352) and the valve accommodation portion (316, 318), at least one of the bottom wall (316c, 318c) and the lid (341, 351) of the valve accommodation portion (316, 318) preferably has a groove (316d, 341a) around the central axis (AX), and the seal member (343, 353) is preferably held by being inserted into the groove (316d, 341a).

With this configuration, at least one of the bottom wall (316c, 318c) and the lid (341, 351) of the valve accommodation portion (316, 318) of the first housing (310) has the groove (316d, 341a) around the central axis (AX), and the seal member (343, 353) of the rotary valve (340, 350) is held by being inserted into the groove (316d, 341a). Therefore, the seal member (343, 353) is positioned in the height direction, and the seal member (343, 353) can be prevented from falling down due to an external force, rotation of the rotor (342, 352), or the like.

(4) In the manifold (300) according to any one of Items (1) to (3), the first housing (310) preferably includes a fixing portion (326) fixed to a support frame (380).

With this configuration, since the fixing portion (326) is disposed in the first housing (310) which accommodates the rotary valve (340, 350), the first housing (310) is directly fixed to the support frame (380). Therefore, the force in the direction in which the joint acting on the joint portion between the first housing (310) and the second housing (330) is released is only due to the weight of the second housing (330) that is lighter than the first housing (310). Therefore, even when unintended vibration, impact, or the like acts on the joint portion, there is little possibility that the joint is released and the second housing (330) falls off, and the manifold (300) can be reliably fixed to the support frame (380).

The present disclosure is applicable to a manifold.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A manifold (300) comprising:
a resin-made manifold main body (302) including a plurality of housings (310, 330) joined to each other and having a plurality of flow paths (312) therein; and
a rotary valve (340, 350) that regulates a flow of a fluid flowing through the flow paths (312), wherein
a first housing (310) that is one of two housings having joint portions (324, 332) joined to each other among the plurality of housings (310, 330) constituting the manifold main body (302) includes a cylindrical valve accommodation portion (316, 318) that is allowed to accommodate and support the rotary valve (340, 350), and wherein
at least part of the valve accommodation portion (316, 318) protrudes toward a second housing (330) side relative to the joint portions (324, 332), the second housing (330) being the other of the two housings.

2. The manifold (300) according to Claim 1, wherein
the valve accommodation portion (316, 318) has an opening (316a, 318a) into which the rotary valve (340, 350) is allowed to be inserted and a bottom wall (316c, 318c) that is allowed to support the rotary valve (340, 350), and wherein
the second housing (330) has a through hole (334, 335), and the bottom wall (316c, 318c) is disposed radially inside the through hole (334, 335) of the second housing (330).

3. The manifold (300) according to Claim 2, wherein an inner diameter of the valve accommodation portion (316, 318) decreases from an opening (316a, 318a) side toward a bottom wall (316c, 318c) side.

4. The manifold (300) according to Claim 2 or 3 further comprising:
a lid (341, 351) that covers the opening (316a, 318a) and is fixed to the first housing (310), wherein
the rotary valve (340, 350) includes a rotor (342, 352) that rotates about a central axis (AX) of the valve accommodation portion (316, 318) to regulate a flow of the fluid, and a seal member (343, 353) disposed between the rotor (342, 352) and the valve accommodation portion (316, 318), wherein
at least one of the bottom wall (316c, 318c) and the lid (341, 351) of the valve accommodation portion (316, 318) has a groove (316d, 341a) around the central axis (AX), and wherein
the seal member (343, 353) is held by being inserted into the groove (316d, 341a).

5. The manifold (300) according to any one of Claims 1 to 4, wherein the first housing (310) includes a fixing portion (326) fixed to a support frame (380).
